Europäisches Patentamt

European Patent Office

Office européen des brevets

(11) Publication number: **0 334 817**
**A1**

(12) **EUROPEAN PATENT APPLICATION**

(21) Application number: **89830099.1**

(22) Date of filing: **07.03.89**

(51) Int. Cl.4: **F 28 F 9/06**
F 28 F 9/04, F 16 L 41/00
// F28F21/06

(30) Priority: **24.03.88 IT 6726388**

(43) Date of publication of application:
**27.09.89 Bulletin 89/39**

(84) Designated Contracting States:
**DE ES FR GB IT SE**

(71) Applicant: **BORLETTI CLIMATIZZAZIONE S.r.l.**
**Frazione Masio, 24**
**I-10046 Poirino (Torino) (IT)**

(72) Inventor: **Baro, Sergio**
**Via Montelera, 14/2**
**I-10040 Val Della Torre (Torino) (IT)**

(74) Representative: **Buzzi, Franco et al**
**c/o Jacobacci-Casetta & Perani S.p.A. Via Alfieri, 17**
**I-10121 Torino (IT)**

(54) **A radiator for motor vehicles.**

(57) A radiator for motor vehicle air-conditioning systems has a system for effecting a seal between its tubes (10) and tube plates (14), including a gasket (24) having holes (26) with thickened edges (24a) which are adapted to be compressed into suitable frusto-conical collars (14a) of the tube plate (14) by means of a gasket-pressing plate (22). The gasket-pressing plate (22) is kept in the operative position by an internal annular shoulder (20) provided on the side wall (16a) of the header (16) fixed to the respective tube plate (14).

FIG. 1

**Description**

## A radiator for motor vehicles.

The present invention relates to a heat exchanger, particularly for motor vehicle air-conditioning systems, of the type comprising a plurality of tubes, at least one end plate having a plurality of holes provided with collars in which the ends of the tubes are engaged, a cover fixed to the end plate so as to define a header chamber, gasket having a plurality of holes provided with thickened edges, the thickened edges being interposed between the tubes and the collars of the end plate, and a gasket-pressing plate situated on the side of the gasket which faces the header chamber and also having a plurality of holes in which the ends of the tubes of the exchanger are housed.

The object of the present invention is to provide a heat exchanger which can be assembled quickly and easily and enables a seal to be effected between the tubes and the header, which does not depend on the sectional shapes of the tubes.

According to the invention, this object is achieved by virtue of the fact that the cover has engagement means which, when the cover is fitted to the end plate, are adapted to cooperate with the gasket-pressing plate so as to compress it and thus press the thickened edges of the holes of the gasket against the outer surfaces of the tubes to effect a seal between the tubes and the end plate.

The operation of expanding the ends of the tubes over the gasket-pressing plate can thus be avoided, since the "squashing" of the gasket is achieved by the engagement between the cover and the end plate when they are fitted together. Moreover, tubes having circular, oval or elliptical sections can be used in a heat exchanger according to the invention.

In an exchanger in which the end plate and the cover are made of plastics, the cover and the end plate are preferably fitted together by vibration, ultrasonic or hot-blade face welding.

The production cycle for the assembly of the whole exchanger thus takes place in a considerably shorter time with consequent production cost advantages.

Further characteristics and advantages of an exchanger according to the present invention will become clear from the detailed description which follows with reference to the appended drawings, provided by way of non-limiting example, in which:

Figure 1 is a schematic section of a portion of a water-air heat exchanger according to the invention,

Figure 2 is a view similar to Figure 1 and shows a second embodiment of the invention,

Figure 3 is a view similar to Figures 1-2 and shows a third embodiment of the invention, and

Figure 4 is a detail of a variant of the exchanger of Figure 1.

With reference to the drawings, a tube of a heat exchanger used, for example, in a motor vehicle air-conditioning system is indicated 10 and is mounted in a corresponding hole 12 in a plastics end plate 14. In correspondence with the holes 12, the end plate 14 has substantially frusto-conical collars 14a whose function will become clear from the following description. During the expansion of the radiant pack, the tubes 10 are brought into the holes 12 so as to ensure that the joint has a predetermined mechanical strength.

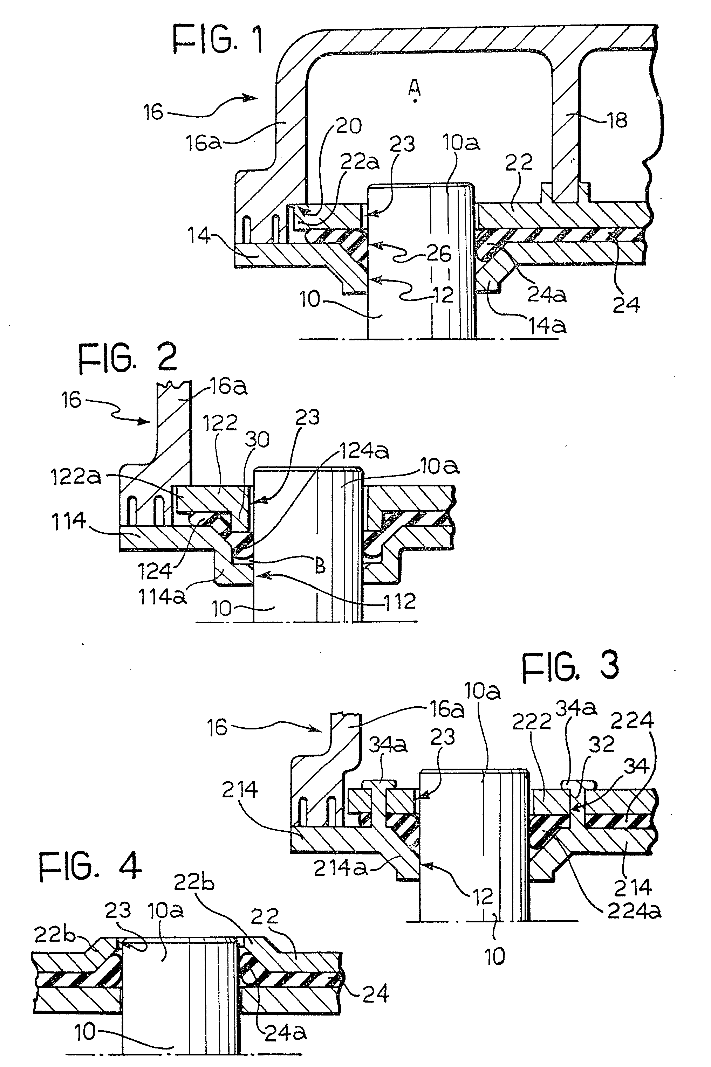

A cover 16 is joined to the end plate 14 by ultrasonic, vibration or hot-blade welding and defines a header chamber A divided by a vertical wall 18. If the header chamber A is not to be divided, rods may be used instead of the wall 18 to stiffen the header. The cover 16 has a side wall 16a which, in correspondence with an internal face, is provided with an annular shoulder 20 for cooperating with a peripheral edge 22a of a gasket-pressing plate 22 provided with holes 23 in which the ends 10a of the tubes 10 are housed. A gasket 24 of elastomeric material is interposed between the gasket-pressing plate 22 and the end plate 14 and is provided with holes 26 in correspondence with the ends 10a of the tubes 10. Moreover, the gasket 24 has thickened edges 24a in correspondence with the holes 26. In the operative configuration illustrated in Figure 1, these thickened edges 24a are pressed into the space between the collar 14a and the respective tube 10 by means of the gasket-pressing plate 22 which is pushed by the annular shoulder 20 and by the wall 18. The deformation of the edge 24a therefore ensures a seal between the tube and the header, as well as "mechanical" fixing between the tube and the header.

The frusto-conical collars may be formed at the edges 22b of the gasket-pressing plate 22 around the holes 23 (Figure 4), instead of in the end plate.

Figure 2 shows a second embodiment of the invention. In Figure 2 the same reference numerals as in Figure 1 have been used for details which are substantially identical, whilst the same reference numerals as in Figure 1, but increased by 100, have been used for details which are similar.

The end plate 114 has collars 114a with L-shaped sections so as to define an annular chamber B beside the end 10a of the tube 10. In correspondence with the holes 23, the gasket-pressing plate 122 has tubular portions 30 projecting from the plane of the plate so as to slide substantially telescopically relative to the collar 114a and compress the thickened edges 124a of the gasket 124. The deformation of the gasket is thus more easily controllable.

In Figure 3, which shows a third embodiment of the invention, the same reference numerals as in Figure 1 has been used for substantially identical details, whilst the same reference numerals as in Figure 1, but increased by 200, have been used for similar details.

In the sealing system shown in Figure 3, the pressure between the gasket-pressing plate 222 and the end plate 214 is achieved by virtue of the engagement of pins 32 formed integrally with the plate 214 in corresponding auxiliary holes 34 formed in the gasket-pressing plate 222. The cooperation between the plate 222 and the pins 32 is achieved, for example, by upsetting the free ends 34a of the pins 34; if the end plate 214 is made of plastics, the ends 34a can be subjected to plastic deformation, for example, by means of ultrasound. The deformation of the thickened edges 224a of the gasket 224 is thus achieved independently of the fitting together of the cover 16 and the end plate 214.

## Claims

1. A heat exchanger, particularly for motor vehicle air-conditioning systems, of the type comprising:
- a plurality of tubes (10),
- at least one end plate (14, 114) having a plurality of holes (12, 112) provided with collars (14a, 114a) in which the ends (10a) of the tubes (10) are engaged,
- a cover (16) fixed to the end plate (14, 114) so as to define a header chamber (A),
- a gasket (24, 124) having a plurality of holes (26) with thickened edges (24a, 124a), the thickened edges being interposed between the tubes and the collars of the end plate, and
- a gasket-pressing plate (22, 122) situated on the side of the gasket which faces the header chamber (A) and also having a plurality of holes in which the ends of the tubes of the exchanger are housed, characterised in that the cover (16) has engagement means (20, 18) which, when the cover is fitted to the end plate (14, 114), are adapted to cooperate with the gasket-pressing plate (22, 122) so as to compress it and thus press the thickened edges (24a, 124a) of the holes (26) of the gasket (24, 124) against the outer surfaces of the tubes (10) to effect a seal between the tubes and the end plate.

2. An exchanger according to Claim 1, in which the end plate (14, 114) and the cover (16) are made of plastics material, characterised in that the cover and the end plate are fitted together by vibration, ultrasonic or hot-blade face welding.

3. An exchanger according to Claim 1, charcterised in that the engagement means comprise an annular shoulder (20) in correspondence with side walls (16a) of the cover (16) for cooperating with a peripheral edge (22a, 122a) of the gasket-pressing plate (22, 122).

4. An exchanger according to any one of the preceding claims, characterised in that the collars (114a) of the end plate (114) have walls with L-shaped sections, and in that the gasket-pressing plate (122) has edges which are in correspondence with the respective holes (23) and are bent into L-shapes substantially corresponding to those of the collars (114a).

5. A heat exchanger, particularly for motor vehicle air-conditioning systems of the type comprising a plurality of tubes, at least one plastics end plate having a plurality of holes with collars in which the ends of the tubes are engaged, a plastics cover fixed to the end plate so as to define a header chamber, a gasket having a plurality of holes provided with thickened edges, the thickened edges being interposed between the tubes and the collars of the end plate, a gasket-pressing plate situated on the side of the gasket which faces the header chamber and also having a plurality of holes in which the ends of the tubes of the exchanger are housed, characterised in that the gasket-pressing plate (222) has a plurality of auxiliary holes (34) for the passage of fixing pins (32) integral with the end plate (214), the pins being upset by plastic deformation onto the gasket-pressing plate (222) so as to compress the gasket (224).

EP 0 334 817 A1

## FIG. 1

## FIG. 2

## FIG. 3

## FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 004 860 (CHAUSSON)<br>* Claims 1-3,7,10; page 6, lines 28-30; page 7, lines 1-9; figures 1-8 * | 1,3,5 | F 28 F 9/06<br>F 28 F 9/04<br>F 16 L 41/00 //<br>F 28 F 21/06 |
| Y | GB-A- 431 863 (HOULDING)<br>* Claims 1,3; figures 1,3-5 * | 1,3,5 | |
| A | FR-A-2 214 875 (SÜDDEUTSCHE KÜHLERFABRIK)<br>* Page 3, lines 19-40; page 4, lines 1-8; figures 1,9,12 * | 1,3 | |
| A | DE-A-2 930 577 (WIESSNER)<br>* Figures 4,5 * | 1 | |
| A | GB-A- 315 934 (KIRK)<br>* Figures 3-5 * | 1 | |
| A | FR-A-2 512 941 (VALEO)<br>* Page 5, lines 17-24; figure 1 * | 2 | |
| A | GB-A- 559 981 (CHEW et al.)<br>* Figures 1,2,4,5 * | 4 | |

TECHNICAL FIELDS SEARCHED (Int. Cl.4)

F 28 F
F 16 L
B 60 H
F 02 F

The present search report has been drawn up for all claims

| Place of search | Date of completion of the search | Examiner |
|---|---|---|
| THE HAGUE | 19-06-1989 | HOERNELL, L.H. |